# EUROPEAN PATENT APPLICATION

(11) **EP 4 040 552 A1**
(43) Date of publication of application: **10.08.2022**
(21) Application number: 20872835.2
(22) Date of filing: 04.09.2020
(51) Int. Cl.: H01M 10/04, H01M 10/0585, H01M 10/0587, H01M 50/10, H01M 50/172, H01M 50/543

(54) **SECONDARY CELL**

(30) Priority: 30.09.2019 JP 2019179800
(71) Applicant: Murata Manufacturing Co., Ltd., Nagaokakyo-shi, Kyoto 617-8555 (JP)
(72) Inventor: KATSUMOTO Taichi, Nagaokakyo-shi, Kyoto 617-8555 (JP); EGUCHI Kenta, Nagaokakyo-shi, Kyoto 617-8555 (JP); NISHIKAWA Etsuo, Nagaokakyo-shi, Kyoto 617-8555 (JP); KAMIKIDO Toshifumi, Nagaokakyo-shi, Kyoto 617-8555 (JP); KITAMURA Toyofumi, Nagaokakyo-shi, Kyoto 617-8555 (JP); YAMADA Hideaki, Nagaokakyo-shi, Kyoto 617-8555 (JP)
(74) Representative: Witte, Weller & Partner Patentanwälte mbB
(86) International application number: PCT/JP2020/033533
(87) International publication number: WO 2021/065335

(57) **Abstract**

A secondary battery includes a battery device, an outer package member, and an electrode terminal. The battery device includes a positive electrode and a negative electrode. The outer package member has a flat and columnar shape, and includes a containing part and a protruding part. The containing part contains the battery device inside, and the protruding part protrudes from the containing part. The outer package member is coupled to one of the positive electrode and the negative electrode. The electrode terminal is coupled to the other of the positive electrode and the negative electrode. The electrode terminal is disposed inside the protruding part, and includes a portion protruding from the protruding part.

## Description

### Technical Field

The technology relates to a secondary battery.

### Background Art

Various electronic apparatuses such as mobile phones have been widely used. Such widespread use has promoted development of a secondary battery as a power source that is smaller in size and lighter in weight and allows for a higher energy density. A configuration of the secondary battery influences a battery characteristic. Accordingly, various considerations have been given to the configuration of the secondary battery.

Specifically, in order to improve resistance to mechanical loads, an electrode-separator assembly is contained inside two metallic housing half-parts (a cell cup and a cell top) that are fitted to each other with an electrically insulating seal interposed therebetween. For example, see PTL 1.

Further, in order to secure sealability against a rise in internal pressure, a power generation element is contained inside a case, and an electrode terminal is coupled to the power generation element. The electrode terminal penetrates the case and protrudes from the case. For example, see PTL 2.

### Citation List

### Patent Literature

PTL 1: Japanese Unexamined Patent Application Publication (Published Japanese Translation of PCT Application) No. JP2012-517658
PTL 2: Japanese Unexamined Patent Application Publication No. 2005-302625

### Summary of the Invention

Various considerations have been made to solve problems of the secondary battery; however, the secondary battery has not yet achieved sufficient convenience in coupling to an electronic apparatus, and there is still room for improvement in terms thereof.

The technology has been made in view of such an issue and it is an object of the technology to provide a secondary battery that allows for easy coupling to an electronic apparatus.

A secondary battery according to an embodiment of the technology includes a battery device, an outer package member, and an electrode terminal. The battery device includes a positive electrode and a negative electrode. The outer package member has a flat and columnar shape, and includes a containing part and a protruding part. The containing part contains the battery device inside, and the protruding part protrudes from the containing part. The outer package member is coupled to one of the positive electrode and the negative electrode. The electrode terminal is coupled to the other of the positive electrode and the negative electrode. The electrode terminal is disposed inside the protruding part, and includes a portion protruding from the protruding part.

According to the secondary battery of the embodiment of the technology, in the flat and columnar outer package member including the containing part and the protruding part, the battery device including the positive electrode and the negative electrode is contained inside the containing part. The electrode terminal including a portion protruding from the protruding part is disposed inside the protruding part. The outer package member is coupled to one of the positive electrode and the negative electrode. The electrode terminal is coupled to the other of the positive electrode and the negative electrode. Accordingly, it is possible to easily couple the secondary battery to an electronic apparatus.

Note that effects of the technology are not necessarily limited to those described above and may include any of a series of effects described below in relation to the technology.

### Brief Description of Drawings

[FIG. 1] FIG. 1 is a perspective view of a configuration of a secondary battery according to a first embodiment of the technology.
[FIG. 2] FIG. 2 is an enlarged sectional view of the configuration of the secondary battery illustrated in FIG. 1.
[FIG. 3] FIG. 3 is a perspective view of a configuration of a battery device illustrated in FIG. 1.
[FIG. 4] FIG. 4 is an enlarged perspective view of a configuration of an electrode terminal illustrated in FIG. 1.
[FIG. 5] FIG. 5 is a perspective view of a configuration of a battery can to be used in a process of manufacturing the secondary battery.
[FIG. 6] FIG. 6 is a sectional view of a configuration of a secondary battery of a comparative example.
[FIG. 7] FIG. 7 is a plan diagram for describing an example of use of the secondary battery according to the first embodiment of the technology.
[FIG. 8] FIG. 8 is a sectional diagram for describing an example of use of the secondary battery of the comparative example.
[FIG. 9] FIG. 9 is a sectional diagram for describing another example of use of the secondary battery of the comparative example.
[FIG. 10] FIG. 10 is a perspective view of a configuration of a secondary battery according to a second embodiment of the technology.
[FIG. 11] FIG. 11 is an enlarged sectional view of the configuration of the secondary battery illustrated in FIG. 10.
[FIG. 12] FIG. 12 is a perspective view of a configuration of a battery device illustrated in FIG. 10.
[FIG. 13] FIG. 13 is a sectional view of a configuration of a secondary battery of Modification 1.
[FIG. 14] FIG. 14 is a sectional view of a configuration of a secondary battery of Modification 2.
[FIG. 15] FIG. 15 is a sectional view of a configuration of a secondary battery of Modification 3.
[FIG. 16] FIG. 16 is a sectional view of a configuration of a secondary battery of Modification 4.
[FIG. 17] FIG. 17 is a sectional view of a configuration of a secondary battery of Modification 6.
[FIG. 18] FIG. 18 is a sectional view of a configuration of a secondary battery of Modification 7.
[FIG. 19] FIG. 19 is a perspective view of a configuration of a battery can to be used in a process of manufacturing a secondary battery of Modification 8.
[FIG. 20] FIG. 20 is a perspective view of a configuration of a battery can to be used in a process of manufacturing a secondary battery of Modification 9.

### Modes for Carrying Out the Invention

Some embodiments of the technology are described below in detail with reference to the drawings. The description is given in the following order.
1. Secondary Battery (First Embodiment)
   1-1. Configuration
   1-2. Operation
   1-3. Manufacturing Method
   1-4. Action and Effects
   1-5. Example of Use
2. Secondary Battery (Second Embodiment)
3. Modifications

### <1. Secondary Battery (First Embodiment)>

A description is given first of a secondary battery according to a first embodiment of the technology.

Described here is a secondary battery having a flat and columnar shape. Examples of the secondary battery include a so-called coin-type secondary battery and a so-called button-type secondary battery. As will be described later, the flat and columnar secondary battery includes a pair of bottom parts and a sidewall part. The bottom parts are opposed to each other. The sidewall part lies between the bottom parts. This secondary battery has a height that is small relative to an outer diameter.

A charge and discharge principle of the secondary battery is not particularly limited. The secondary battery described below obtains a battery capacity by utilizing insertion and extraction of an electrode reactant. The secondary battery includes a positive electrode, a negative electrode, and an electrolytic solution. In the secondary battery, in order to prevent precipitation of the electrode reactant on a surface of the negative electrode in the middle of charging, a charge capacity of the negative electrode is greater than a discharge capacity of the positive electrode. In other words, an electrochemical capacity per unit area of the negative electrode is set to be greater than an electrochemical capacity per unit area of the positive electrode.

Although not limited to a particular kind, the electrode reactant is a light metal, such as an alkali metal or an alkaline earth metal. Examples of the alkali metal include lithium, sodium, and potassium. Examples of the alkaline earth metal include beryllium, magnesium, and calcium.

In the following, a description is given of an example case where the electrode reactant is lithium. A secondary battery that obtains a battery capacity by utilizing insertion and extraction of lithium is a so-called lithium-ion secondary battery. In the lithium-ion secondary battery, lithium is inserted and extracted in an ionic state.

### <1-1. Configuration>

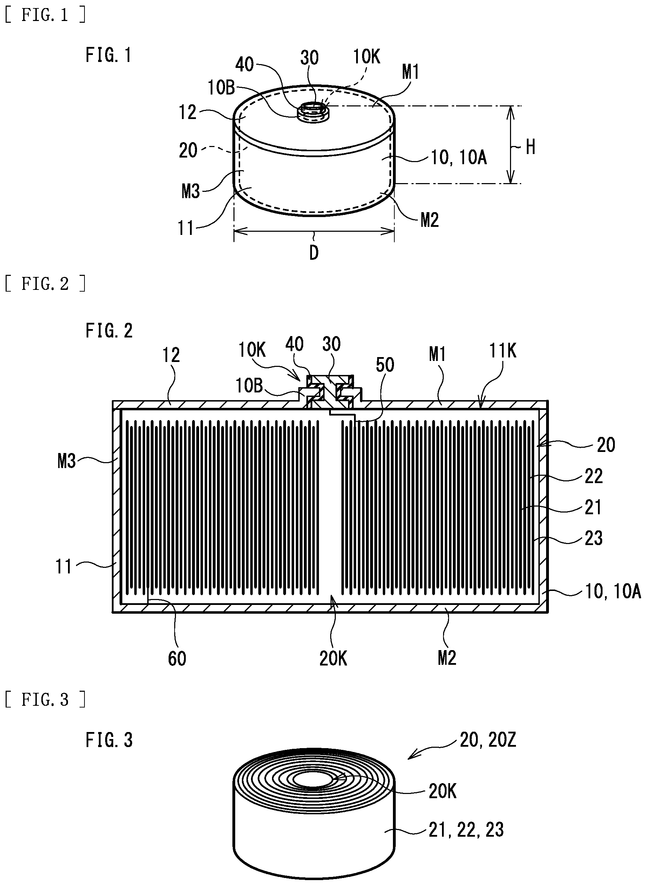

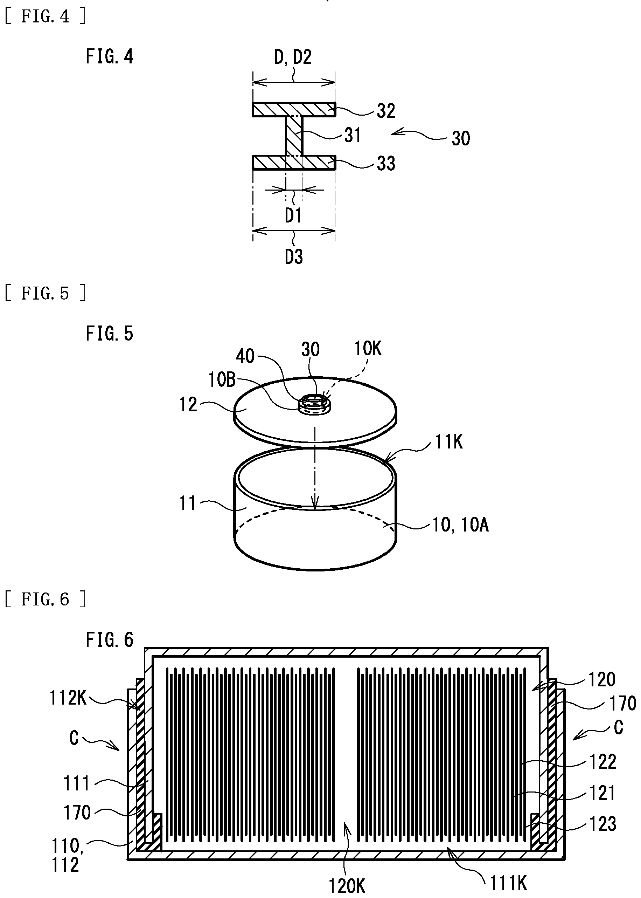

FIG. 1 is a perspective view of a configuration of the secondary battery according to the first embodiment. FIG. 2 is an enlarged sectional view of the configuration of the secondary battery illustrated in FIG. 1. FIG. 3 is a perspective view of a configuration of a battery device 20 illustrated in FIG. 1. FIG. 4 is an enlarged sectional view of a configuration of an electrode terminal 30 illustrated in FIG. 1. For simplifying the illustration, a positive electrode 21, a negative electrode 22, a separator 23, a positive electrode lead 50, and a negative electrode lead 60, which will be described later, are each illustrated in a linear shape in FIG. 2.

For convenience, the following description is given with an up direction in FIGs. 1 and 2 as an upper side of the secondary battery, and a down direction in FIGs. 1 and 2 as a lower side of the secondary battery.

The secondary battery is a button-type secondary battery, and therefore, as illustrated in FIG. 1, has a flat and columnar three-dimensional shape with a height H thereof small relative to an outer diameter D thereof. Here, the secondary battery has a flat and cylindrical (circular columnar) three-dimensional shape. Dimensions of the secondary battery are not particularly limited; however, for example, the outer diameter (here, the diameter of the circular shape) D is from 3 mm to 30 mm both inclusive, and the height H is from 0.5 mm to 70 mm both inclusive. Note that a ratio of the outer diameter D to the height H, i.e., D/H, is greater than 1 and smaller than or equal to 25.

Specifically, as illustrated in FIGs. 1 to 4, the secondary battery includes a battery can 10, the battery device 20, the electrode terminal 30, a gasket 40, the positive electrode lead 50, and the negative electrode lead 60.

### [Battery Can]

As illustrated in FIGs. 1 and 2, the battery can 10 is an outer package member that contains the battery device 20.

Here, the battery can 10 has a hollow, flat and cylindrical three-dimensional shape in accordance with the three-dimensional shape of the secondary battery described above. The battery can 10 thus includes a pair of bottom parts M1 and M2, and a sidewall part M3. The sidewall part M3 is coupled to the bottom part M1 at one end, and is coupled to the bottom part M2 at the other end. Because the battery can 10 is cylindrical as described above, the bottom parts M1 and M2 are each circular in plan shape, and a surface of the sidewall part M3 is a convex curved surface.

The battery can 10 includes a container part 11 and a cover part 12. The container part 11 is a flat and cylindrical (handleless mug-shaped) member with one end open and the other end closed. The container part 11 contains the battery device 20. More specifically, the container part 11 has an opening 11K at one end to allow the battery device 20 to be contained in the container part 11. The cover part 12 is a generally plate-shaped member, and is joined to the container part 11 to cover the opening 11K.

Here, as will be described later, the cover part 12 is joined to the container part 11 by a method such as a welding method. More specifically, the battery can 10 is a welded can including two members (the container part 11 and the cover part 12) welded to each other. The battery can 10 after the cover part 12 has been joined to the container part 11 is a single member as a whole, that is, not separable into two or more members. Note that the battery can 10 may be a can (a single member as a whole) including three or more members welded to each other.

As a result, the battery can 10 is a single member including no folded-over portion or no portion in which two or more members are placed over each other. What is meant by "including no folded-over portion" is that the battery can 10 is not so processed as to include a portion folded over another portion. What is meant by "including no portion in which two or more members are placed over each other" is that the battery can 10 is physically a single member and is therefore not a composite body in which two or more members including a container and a cover are so fitted to each other as to be separable later. More specifically, the "portion in which two or more members are placed over each other" corresponds to a crimp part C provided in a secondary battery of a comparative example (see FIG. 6) to be described later, that is, a crimped part formed by means of a so-called crimping process. In the crimp part C, a container part 111 and a cover part 112 are crimped to each other with respective portions thereof placed over each other.

Thus, the battery can 10 described here is without the foregoing crimp part C, and is therefore a so-called crimpless can. A reason for employing the crimpless can is that this increases a device space volume inside the battery can 10, and accordingly, increases also an energy density per unit volume of the secondary battery. The "device space volume" refers to a volume of an internal space of the battery can 10 available for containing the battery device 20 therein.

Further, the battery can 10 is electrically conductive. The battery can 10 thus serves as a negative electrode terminal because the battery can 10 is coupled to the negative electrode 22, which will be described later, of the battery device 20. A reason for employing such a configuration is that allowing the battery can 10 to serve as the negative electrode terminal makes it unnecessary to provide a negative electrode terminal separate from the battery can 10 in the secondary battery. A decrease in device space volume resulting from the presence of a negative electrode terminal is thereby avoided. This results in an increase in device space volume, and accordingly an increase in energy density per unit volume of the secondary battery.

Further, the battery can 10 has a through hole 10K for use to attach the electrode terminal 30 thereto. A position on the battery can 10 where the through hole 10K is provided is not particularly limited, and may be freely chosen in accordance with a mounting position of the electrode terminal 30. Here, the through hole 10K is provided at the bottom part M1.

The battery can 10 includes one or more of electrically conductive materials including, without limitation, metals (including stainless steel) and alloys. Here, in order to serve as the negative electrode terminal, the battery can 10 includes one or more of materials including, without limitation, iron, copper, nickel, stainless steel, an iron alloy, a copper alloy, and a nickel alloy. The kinds of the stainless steel employable include SUS304 and SUS316, but are not particularly limited thereto.

Note that, as will be described later, the battery can 10 is insulated via the gasket 40 from the electrode terminal 30 serving as a positive electrode terminal. This is for the purpose of preventing the occurrence of a contact (a short circuit) between the battery can 10 and the electrode terminal 30.

Here, the battery can 10 as a whole includes a containing part 10A and a protruding part 10B. The containing part 10A is a part of the battery can 10 that contains the battery device 20 inside. The protruding part 10B is a part of the battery can 10 that protrudes from the containing part 10A and supports the electrode terminal 30. Here, the protruding part 10B is provided at the bottom part M1. The protruding part 10B has the through hole 10K communicating with an inside of the containing part 10A. Because the protruding part 10B belongs to the battery can 10 serving as the negative electrode terminal, the protruding part 10B also serves as the negative electrode terminal.

Note that the battery can 10 includes the container part 11 and the cover part 12 as described above. Correspondence relationships of the container part 11 and the cover part 12 with the containing part 10A and the protruding part 10B are as follows. The container part 11 belongs to the containing part 10A. The cover part 12 belongs to the containing part 10A, and is also the protruding part 10B. More specifically, the battery can 10 excluding the protruding part 10B is the containing part 10A.

### [Battery Device]

The battery device 20 is a device causing charging and discharging reactions to proceed, and includes, as illustrated in FIGs. 1 to 3, the positive electrode 21, the negative electrode 22, the separator 23, and an electrolytic solution which is a liquid electrolyte. Note that FIGs. 2 and 3 each omit the illustration of the electrolytic solution.

The battery device 20 has a three-dimensional shape corresponding to the three-dimensional shape of the battery can 10. The "three-dimensional shape corresponding to the three-dimensional shape of the battery can 10" refers to a three-dimensional shape similar to that of the battery can 10. A reason for allowing the battery device 20 to have such a three-dimensional shape is that this makes it harder for a so-called dead space (a gap between the battery can 10 and the battery device 20) to result upon placing the battery device 20 in the battery can 10 than in a case where the battery device 20 has a three-dimensional shape different from that of the battery can 10. This allows for efficient use of the internal space of the battery can 10, resulting in an increase in device space volume, and accordingly an increase in energy density per unit volume of the secondary battery. Here, the battery can 10 has a flat and cylindrical three-dimensional shape as described above, and therefore the battery device 20 also has a flat and cylindrical three-dimensional shape.

Here, the positive electrode 21 and the negative electrode 22 are wound with the separator 23 interposed therebetween. More specifically, the positive electrode 21 and the negative electrode 22 are stacked on each other with the separator 23 interposed therebetween, and are wound in the state of the stack with the separator 23 interposed between the positive electrode 21 and the negative electrode 22. Thus, the battery device 20 is a wound electrode body including the positive electrode 21 and the negative electrode 22 that are wound with the separator 23 interposed therebetween. The number of winds of each of the positive electrode 21, the negative electrode 22, and the separator 23 is not particularly limited, and may be freely chosen.

The battery device 20 has a winding center space 20K. More specifically, the positive electrode 21, the negative electrode 22, and the separator 23 are wound in the battery device 20, and as a result, the winding center space 20K is defined at a winding core part by the positive electrode 21, the negative electrode 22, and the separator 23. Because of being at the winding core part, the winding center space 20K is a space in which none of the positive electrode 21, the negative electrode 22, and the separator 23 is present.

Note that the positive electrode 21 has a height smaller than that of the separator 23. A reason for this is that this prevents a short circuit between the battery can 10 serving as the negative electrode terminal and the positive electrode 21. Although not particularly limited, a height of the negative electrode 22 is preferably larger than the height of the positive electrode 21. A reason for this is that this prevents a short circuit between the positive electrode 21 and the negative electrode 22 caused by precipitation of lithium upon charging and discharging.

The positive electrode 21 includes a positive electrode current collector and a positive electrode active material layer. The positive electrode active material layer may be provided on each of both sides of the positive electrode current collector, or may be provided only on one side of the positive electrode current collector. The positive electrode current collector includes a material similar to a material included in the electrode terminal 30. Note that the material included in the positive electrode current collector may be the same as or different from the material included in the electrode terminal 30. The positive electrode active material layer includes a positive electrode active material into which lithium is insertable and from which lithium is extractable. The positive electrode active material includes one or more of lithium-containing compounds including, without limitation, a lithium-containing transition metal compound. Examples of the lithium-containing transition metal compound include an oxide, a phosphoric acid compound, a silicic acid compound, a boric acid compound, etc. each including lithium and one or more transition metal elements as constituent elements. Note that the positive electrode active material layer may further include, without limitation, a positive electrode binder and a positive electrode conductor.

The negative electrode 22 includes a negative electrode current collector and a negative electrode active material layer. The negative electrode active material layer may be provided on each of both sides of the negative electrode current collector, or may be provided only on one side of the negative electrode current collector. The negative electrode current collector includes a material similar to the material included in the battery can 10. Note that the material included in the negative electrode current collector may be the same as or different from the material included in the battery can 10. The negative electrode active material layer includes a negative electrode active material into which lithium is insertable and from which lithium is extractable. The negative electrode active material includes one or more of materials including, without limitation, a carbon material and a metal-based material. Examples of the carbon material include graphite. The metal-based material is a material that includes, as a constituent element or constituent elements, one or more elements among metal elements and metalloid elements that are each able to form an alloy with lithium. Specifically, the metal-based material includes one or more of elements including, without limitation, silicon and tin, as a constituent element or constituent elements. The metal-based material may be a simple substance, an alloy, a compound, or a mixture of two or more thereof. Note that the negative electrode active material layer may further include, without limitation, a negative electrode binder and a negative electrode conductor.

The separator 23 is an insulating porous film interposed between the positive electrode 21 and the negative electrode 22. The separator 23 allows lithium to pass therethrough while preventing a short circuit between the positive electrode 21 and the negative electrode 22. This separator 23 includes one or more of polymer compounds, including polyethylene.

The positive electrode 21, the negative electrode 22, and the separator 23 are each impregnated with the electrolytic solution. The electrolytic solution includes a solvent and an electrolyte salt. The solvent includes one or more of nonaqueous solvents (organic solvents) including, without limitation, a carbonic-acid-ester-based compound, a carboxylic-acid-ester-based compound, and a lactone-based compound. The electrolyte salt includes one or more of light metal salts, including a lithium salt.

Note that FIG. 3 also illustrates a wound body 20Z to be used to fabricate the battery device 20 in a process of manufacturing the secondary battery to be described later. The wound body 20Z has a configuration similar to that of the battery device 20 which is a wound electrode body, except that the positive electrode 21, the negative electrode 22, and the separator 23 are each yet to be impregnated with the electrolytic solution.

### [Electrode Terminal]

The electrode terminal 30 is an external coupling terminal to be coupled to an electronic apparatus on which the secondary battery is mountable. Here, as illustrated in FIGs. 1, 2, and 4, the electrode terminal 30 is coupled to the positive electrode 21 (the positive electrode current collector) of the battery device 20. The electrode terminal 30 thus serves as the positive electrode terminal. As a result, upon use of the secondary battery, the secondary battery is coupled to the electronic apparatus via the electrode terminal 30 (the positive electrode terminal) and the battery can 10 (the negative electrode terminal), and the electronic apparatus thereby becomes operable using the secondary battery as a power source.

The electrode terminal 30 includes one or more of electrically conductive materials including, without limitation, metals (including stainless steel) and alloys. Here, in order to serve as the positive electrode terminal, the electrode terminal 30 includes one or more of materials including, without limitation, aluminum, an aluminum alloy, and stainless steel.

Further, the electrode terminal 30 is provided on the battery can 10. The electrode terminal 30 is provided at the bottom part M1, and more specifically, is disposed inside the protruding part 10B, with a portion of the electrode terminal 30 protruding from the protruding part 10B. A reason for this is that this makes it easier for the electrode terminal 30 to be coupled to the electronic apparatus upon use of the secondary battery. The position of the electrode terminal 30 at the bottom part M1 is not particularly limited. Here, the electrode terminal 30 is disposed substantially in the middle of the bottom part M1.

A reason why a portion of the electrode terminal 30 disposed inside the protruding part 10B protrudes is that this makes it possible for the secondary battery to be coupled to the electronic apparatus only in the vicinity of the protruding part 10B because the electrode terminal 30 serving as the positive electrode terminal and the protruding part 10B serving as the negative electrode terminal are disposed in proximity to each other. This allows for easy coupling of the secondary battery to the electronic apparatus.

A description will be given later of a detailed reason why it becomes possible for the secondary battery to be easily coupled to the electronic apparatus on the basis of the above-described configuration of the electrode terminal 30.

A location range of the electrode terminal 30 is not particularly limited as long as the electrode terminal 30 is disposed inside the protruding part 10B and a portion of the electrode terminal 30 protrudes from the protruding part 10B.

In particular, it is preferable that the portion of the electrode terminal 30 protrude from the protruding part 10B in a direction in which the protruding part 10B protrudes from the containing part 10A. A reason for this is that this allows for easier coupling of the electrode terminal 30 serving as the positive electrode terminal to the electronic apparatus than in a case where no portion of the electrode terminal 30 protrudes from the protruding part 10B.

Further, the electrode terminal 30 is preferably not disposed to extend to the inside of the containing part 10A. A reason for this is that this increases the device space volume, and accordingly increases the energy density per unit volume, as compared with a case where the electrode terminal 30 is disposed to extend to the inside of the containing part 10A.

The three-dimensional shape of the electrode terminal 30 is not particularly limited. Here, the electrode terminal 30 includes terminal parts 31, 32, and 33. The terminal parts 32 and 33 are coupled to respective opposite ends of the terminal part 31.

Specifically, the terminal part 31 is a first terminal part having a cylindrical shape and disposed in the through hole 10K. The terminal part 31 has an outer diameter D (D1) smaller than an inner diameter of the through hole 10K. The terminal part 32 is a second terminal part having a cylindrical shape, and is coupled to the terminal part 31 on a rear side in a direction from the electrode terminal 30 toward an inside of the battery can 10 (the down direction), that is, on the upper side in FIG. 4. The terminal part 32 has an outer diameter D (D2) larger than the inner diameter of the through hole 10K. The terminal part 33 is a third terminal part having a cylindrical shape, and is coupled to the terminal part 31 on a front side in the direction from the electrode terminal 30 toward the inside of the battery can 10, that is, on the lower side in FIG. 4. The terminal part 33 has an outer diameter D (D3) larger than the inner diameter of the through hole 10K. Note that the outer diameters D2 and D3 may be equal, or may be different from each other. Here, the outer diameters D2 and D3 are equal.

Thus, the electrode terminal 30 has a generally cylindrical three-dimensional shape with the outer diameter D reduced partly along the direction from the electrode terminal 30 toward the inside of the battery can 10. A reason for employing such a shape is that the outer diameter D2 of the terminal part 32 larger than the inner diameter of the through hole 10K helps to prevent the terminal part 32 from passing through the through hole 10K, and the outer diameter D3 of the terminal part 33 larger than the inner diameter of the through hole 10K helps to prevent the terminal part 33 from passing through the through hole 10K. A further reason is that the electrode terminal 30 is fixed to the protruding part 10B by utilizing a pressing force of the terminal part 32 on the protruding part 10B and a pressing force of the terminal part 33 on the protruding part 10B. This helps to prevent the electrode terminal 30 from falling out of the battery can 10.

### [Gasket]

The gasket 40 is an insulating member disposed between the battery can 10 and the electrode terminal 30, as illustrated in FIGs. 1 and 2. The gasket 40 insulates the electrode terminal 30 from the battery can 10. The electrode terminal 30 is thus fixed to the battery can 10 with the gasket 40 interposed therebetween.

The gasket 40 includes one or more of insulating materials including, without limitation, polypropylene and polyethylene.

A mounting range of the gasket 40 is not particularly limited. Here, the gasket 40 is disposed to extend along a periphery (a side surface) of the electrode terminal 30 while being interposed between the battery can 10 and the electrode terminal 30.

### [Positive Electrode Lead]

As illustrated in FIG. 2, the positive electrode lead 50 is a coupling wiring line coupling the electrode terminal 30 and the positive electrode 21 to each other, and includes a material similar to the material included in the electrode terminal 30. Note that the material included in the positive electrode lead 50 may be the same as or different from the material included in the electrode terminal 30.

Specifically, one end of the positive electrode lead 50 is coupled to the terminal part 33, and the other end of the positive electrode lead 50 is coupled to the positive electrode 21 (the positive electrode current collector). A coupling position of the positive electrode lead 50 to the positive electrode 21 is not particularly limited, and may be freely chosen. Here, the positive electrode lead 50 is coupled to the positive electrode 21 on a side of an innermost wind.

At each of ends of the positive electrode 21 on an inner side and an outer side of winding, the positive electrode active material layer is not provided on the positive electrode current collector, and the positive electrode current collector is thus exposed. In other words, the positive electrode 21 has a foil winding structure in which only the positive electrode current collector is wound at each of the ends on the inner side and the outer side of the winding. Here, the positive electrode lead 50 is coupled to an end of the positive electrode current collector on the inner side of the winding. However, the positive electrode lead 50 may be coupled to the positive electrode current collector at a position other than the end on the inner side of the winding.

The number of the positive electrode leads 50 is not particularly limited. As the number of the positive electrode leads 50 increases, electrical resistance of the secondary battery (the battery device 20) decreases. Here, the secondary battery is provided with one positive electrode lead 50.

### [Negative Electrode Lead]

As illustrated in FIG. 2, the negative electrode lead 60 is a coupling wiring line coupling the battery can 10 and the negative electrode 22 to each other. The negative electrode lead 60 includes a material similar to the material included in the battery can 10. Note that the material included in the negative electrode lead 60 may be the same as or different from the material included in the battery can 10.

Specifically, one end of the negative electrode lead 60 is coupled to an inner wall face of the battery can 10, and the other end of the negative electrode lead 60 is coupled to the negative electrode 22 (the negative electrode current collector). A coupling position of the negative electrode lead 60 to the negative electrode 22 is not particularly limited, and may be freely chosen. Here, the negative electrode lead 60 is coupled to the negative electrode 22 on a side of an outermost wind.

At each of ends of the negative electrode 22 on the inner side and the outer side of the winding, the negative electrode active material layer is not provided on the negative electrode current collector, and the negative electrode current collector is thus exposed. In other words, the negative electrode 22 has the foil winding structure in which only the negative electrode current collector is wound at each of the ends on the inner side and the outer side of the winding. Here, the negative electrode lead 60 is coupled to an end of the negative electrode current collector on the outer side of the winding. However, the negative electrode lead 60 may be coupled to the negative electrode current collector at a position other than the end on the outer side of the winding.

### [Others]

Note that the secondary battery may further include one or more of other unillustrated components.

Specifically, the secondary battery includes a safety valve mechanism. The safety valve mechanism cuts off the electrical coupling between the battery can 10 and the battery device 20 if an internal pressure of the battery can 10 reaches a certain level or higher due to, e.g., an internal short circuit or heating from outside. Although a mounting position of the safety valve mechanism is not particularly limited, the safety valve mechanism is provided at one of the bottom parts M1 and M2, preferably the bottom part M2 at which the electrode terminal 30 is not provided.

Further, the secondary battery includes an insulator between the battery can 10 and the battery device 20. The insulator includes one or more of materials including, without limitation, an insulating film and an insulating sheet, and prevents a short circuit between the battery can 10 and the battery device 20 (the positive electrode 21). A mounting range of the insulator is not particularly limited, and may be freely chosen.

Note that the battery can 10 is provided with, for example, a liquid injection hole and a cleavage valve. The liquid injection hole is used for injecting the electrolytic solution into the battery can 10, and is sealed after use. In a case where the internal pressure of the battery can 10 reaches a certain level or higher due to, e.g., an internal short circuit or heating from outside as described above, the cleavage valve cleaves to release the internal pressure. Although there is no limitation on the respective positions at which the liquid injection hole and the cleavage valve are to be provided, the liquid injection hole and the cleavage valve are each provided at one of the bottom parts M1 and M2, preferably the bottom part M2 at which the electrode terminal 30 is not provided, as with the mounting position of the safety valve mechanism described above.

### <1-2. Operation>

The secondary battery operates in a manner described below. Upon charging, in the battery device 20, lithium is extracted from the positive electrode 21, and the extracted lithium is inserted into the negative electrode 22 via the electrolytic solution. Upon discharging, in the battery device 20, lithium is extracted from the negative electrode 22, and the extracted lithium is inserted into the positive electrode 21 via the electrolytic solution. In these cases, the lithium is inserted and extracted in an ionic state.

### <1-3. Manufacturing Method>

FIG. 5 is a perspective view of the configuration of the battery can 10 to be used in a process of manufacturing the secondary battery, and corresponds to FIG. 1. Note that FIG. 5 illustrates a state where the cover part 12 is separated from the container part 11. In the following, FIGs. 1 to 4 described already will be referred to when necessary.

In a case of manufacturing the secondary battery, the secondary battery is assembled by a procedure described below. In this case, the wound body 20Z described above is used to fabricate the battery device 20, and the cover part 12 with the electrode terminal 30 attached thereto with the gasket 40 therebetween in advance is used to assemble the battery can 10.

First, prepared is a slurry including, without limitation, the positive electrode active material in a solvent such as an organic solvent, following which the slurry is applied on the positive electrode current collector to thereby form the positive electrode active material layer. The positive electrode 21 including the positive electrode current collector and the positive electrode active material layer is thereby fabricated.

Thereafter, prepared is a slurry including, without limitation, the negative electrode active material in a solvent such as an organic solvent, following which the slurry is applied on the negative electrode current collector to thereby form the negative electrode active material layer. The negative electrode 22 including the negative electrode current collector and the negative electrode active material layer is thereby fabricated.

Thereafter, the electrolyte salt is added to a solvent. The electrolytic solution including the solvent and the electrolyte salt is thereby prepared.

Thereafter, the positive electrode 21 and the negative electrode 22 are stacked on each other with the separator 23 interposed therebetween, following which the stack of the positive electrode 21, the negative electrode 22, and the separator 23 is wound to thereby fabricate the wound body 20Z having the winding center space 20K.

Thereafter, the wound body 20Z is placed into the container part 11 through the opening 11K. In this case, one end of the negative electrode lead 60 is coupled to the wound body 20Z (the negative electrode current collector of the negative electrode 22) and the other end of the negative electrode lead 60 is coupled to the container part 11 by a method such as a welding method. Note that one or more of welding methods including, without limitation, a laser welding method and a resistance welding method may be used. Details of the welding method described here apply also to the following.

Thereafter, the cover part 12 with the electrode terminal 30 attached thereto with the gasket 40 therebetween in advance is placed on the container part 11 to cover the opening 11K, following which the cover part 12 is joined to the container part 11 by a method such as a welding method. In this case, one end of the positive electrode lead 50 is coupled to the wound body 20Z (the positive electrode current collector of the positive electrode 21) and the other end of the positive electrode lead 50 is coupled to the electrode terminal 30 by a method such as a welding method. The wound body 20Z is thereby sealed into the battery can 10 (the container part 11 and the cover part 12).

Lastly, the electrolytic solution is injected into the battery can 10 through the unillustrated liquid injection hole, following which the liquid injection hole is sealed. This causes the wound body 20Z (the positive electrode 21, the negative electrode 22, and the separator 23) to be impregnated with the electrolytic solution, thereby fabricating the battery device 20. The battery device 20 is thus sealed into the battery can 10. As a result, the secondary battery is completed.

### <1-4. Action and Effects>

According to the secondary battery of the first embodiment, in the battery can 10 having a flat and columnar shape and including the containing part 10A and the protruding part 10B, the battery device 20 is contained inside the containing part 10A and the electrode terminal 30 is disposed inside the protruding part 10B with a portion of the electrode terminal 30 protruding from the protruding part 10B. Further, the battery can 10 is coupled to the negative electrode 22, and the electrode terminal 30 is coupled to the positive electrode 21. As a result, for a reason described below, it is possible to easily couple the secondary battery to an electronic apparatus.

FIG. 6 illustrates a sectional configuration of a secondary battery of a comparative example, and corresponds to FIG. 2. As illustrated in FIG. 6, the secondary battery of the comparative example includes a battery can 110 (a container part 111 and a cover part 112) and a battery device 120 (a positive electrode 121, a negative electrode 122, and a separator 123) that respectively correspond to the battery can 10 (the container part 11 and the cover part 12) and the battery device 20 (the positive electrode 21, the negative electrode 22, and the separator 23), and further includes a gasket 170 in place of the electrode terminal 30 and the gasket 40.

The container part 111 is a hollow and cylindrical (handleless mug-shaped) member with one end open and the other end closed, and has an opening 111K at the one end. The cover part 112 is a handleless mug-shaped member like the container part 111, and has an opening 112K. The battery device 120 is contained inside the container part 111. The container part 111 and the cover part 112 are fitted to each other with the openings 111K and 112K opposed to each other. As a result, a portion of the container part 111 and a portion of the cover part 112 are placed over each other. The portion of the container part 111 and the portion of the cover part 112 are thus crimped to each other with the gasket 170 interposed therebetween. A so-called crimp part C is thereby provided.

The battery device 120 (the positive electrode 121, the negative electrode 122, and the separator 123) has a configuration similar to that of the battery device 20 (the positive electrode 21, the negative electrode 22, and the separator 23). The gasket 170 includes a polymer compound (an insulating material), such as polypropylene.

The container part 111 is coupled to the positive electrode 121 (the positive electrode current collector) of the battery device 120 via an unillustrated positive electrode lead, and the cover part 112 is coupled to the negative electrode 122 (the negative electrode current collector) of the battery device 120 via an unillustrated negative electrode lead. Accordingly, the container part 111 serves as the positive electrode terminal, and the cover part 112 serves as the negative electrode terminal. The container part 111 includes a material similar to the material included in the electrode terminal 30, and the cover part 112 includes a material similar to the material included in the battery can 10.

In the secondary battery of the comparative example, as illustrated in FIG. 6, a part substantially serving as the positive electrode terminal in the container part 111 is disposed above the battery device 120, and a part substantially serving as the negative electrode terminal in the cover part 112 is disposed below the battery device 120. Thus, the positive electrode terminal and the negative electrode terminal are located opposite to each other. In other words, the positive electrode terminal and the negative electrode terminal are spaced a distance away from each other.

As a result, in the electronic apparatus to which the secondary battery is to be coupled, a positive electrode terminal and a negative electrode terminal have to be spaced a distance away from each other, as in the secondary battery. This results in increased size and complexity of a coupling mechanism between the secondary battery and the electronic apparatus. Accordingly, it is difficult to couple the secondary battery to the electronic apparatus.

In contrast, in the secondary battery according to the present embodiment, as illustrated in FIG. 2, the electrode terminal 30 serving as the positive electrode terminal and the protruding part 10B serving as the negative electrode terminal are both disposed above the battery device 20, and therefore the positive electrode terminal and the negative electrode terminal share a common side, unlike in the secondary battery of the comparative example. In other words, the positive electrode and the negative electrode are disposed in proximity to each other.

Thus, in the electronic apparatus to which the secondary battery is to be coupled, it suffices that the positive electrode and the negative electrode are disposed in proximity to each other, as in the secondary battery. This results in downsizing and simplification of the coupling mechanism between the secondary battery and the electronic apparatus. Accordingly, it is possible to easily couple the secondary battery to the electronic apparatus.

In this case, in particular, owing to the battery can 10 including no crimp part C, the device space volume increases by a volume to be occupied by the crimp part C. Accordingly, the number of winds of each of the positive electrode 21 and the negative electrode 22 increases, and therefore it is possible to increase the energy density per unit volume. Further, because the negative electrode 22 is coupled to the battery can 10 and the battery can 10 serves as the negative electrode terminal, the secondary battery does not have to be provided with a negative electrode terminal separately. This avoids a decrease in device space volume resulting from the presence of a negative electrode terminal, thus making it possible to further increase the energy density per unit volume.

Further, the secondary battery has a flat and columnar shape, in other words, the secondary battery is a small-sized secondary battery, such as a coin-type or button-type secondary battery. Even in the small-sized secondary battery which is highly constrained in terms of size, energy density per unit volume effectively increases. Accordingly, it is possible to achieve higher effects.

In addition, in the secondary battery according to the present embodiment, a portion of the electrode terminal 30 may protrude from the protruding part 10B. This allows for easier coupling of the electrode terminal 30 serving as the positive electrode terminal to the electronic apparatus. Accordingly, it is possible to achieve higher effects.

Further, the electrode terminal 30 may be disposed not to extend to the inside of the containing part 10A. This increases the device space volume further, and consequently increases the energy density per unit volume further, making it possible to achieve higher effects.

Further, the battery can 10 may be a welded can. This makes it easy to provide the battery can 10 including no crimp part C. Accordingly, it is possible to achieve higher effects.

Further, the electrode terminal 30 may include the terminal part 31 having a small outer diameter (D1) and the terminal parts 32 and 33 having large outer diameters (D2 and D3). This helps to prevent the electrode terminal 30 from falling out of the battery can 10. Accordingly, it is possible to achieve higher effects.

Further, the gasket 40 may be disposed between the battery can 10 and the electrode terminal 30. This prevents a short circuit between the electrode terminal 30 and the battery can 10 also in the case where the battery can 10 serves as the negative electrode terminal. Accordingly, it is possible to achieve higher effects.

Further, the battery device 20 may have a three-dimensional shape corresponding to the three-dimensional shape of the battery can 10. This helps to prevent a dead space from resulting upon placing the battery device 20 in the battery can 10. As a result, the device space volume increases. Accordingly, it is possible to achieve higher effects.

Further, in the battery device 20, the positive electrode 21 and the negative electrode 22 may be wound with the separator 23 interposed therebetween. This allows the number of the winds of each of the positive electrode 21 and the negative electrode 22 to increase with an increase in device space volume, resulting in an increase in area over which the positive electrode 21 and the negative electrode 22 are opposed to each other. As a result, the energy density per unit volume increases sufficiently. Accordingly, it is possible to achieve higher effects.

### <1-5. Example of Use>

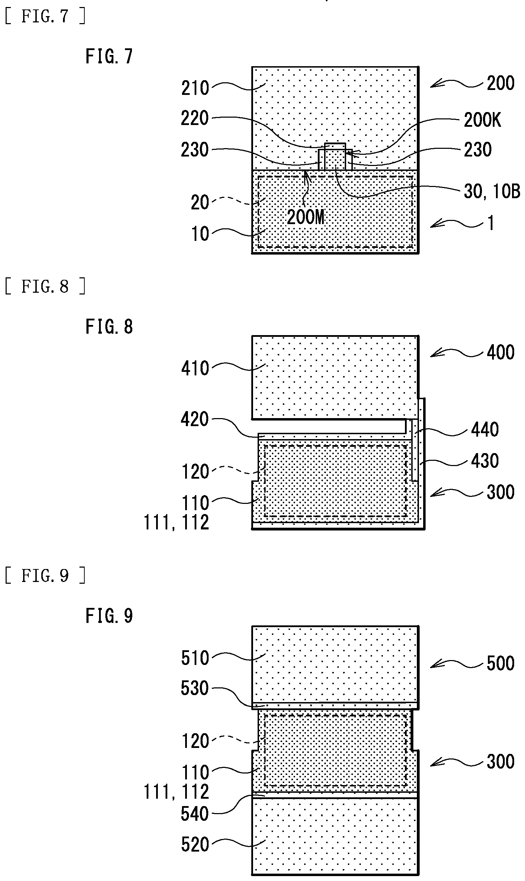

To describe an example of use of the secondary battery according to the present embodiment, i.e., a secondary battery 1, FIG. 7 schematically illustrates a plan configuration of an electronic apparatus 200 to which the secondary battery 1 is coupled. In FIG. 7, the same components as those described already are denoted with the same reference signs.

The secondary battery 1 has the configuration illustrated in FIGs. 1 to 4. More specifically, the secondary battery 1 includes the battery can 10 (the protruding part 10B), the battery device 20, and the electrode terminal 30. In the secondary battery 1, as described above, the electrode terminal 30 protruding from the battery can 10 serves as the positive electrode terminal, and the protruding part 10B serves as the negative electrode terminal. In FIG. 7, the secondary battery 1 is darkly shaded.

The electronic apparatus 200 is operable using the secondary battery 1 as a power source as described above, and has a coupling surface 200M to be coupled to the secondary battery 1. The electronic apparatus 200 includes an apparatus body 210 that executes various functions, a positive electrode terminal 220, and a pair of negative electrode terminals 230. Further, the electronic apparatus 200 has a recess 200K for fit with the secondary battery 1. The positive electrode terminal 220 and the pair of negative electrode terminals 230 are disposed inside the recess 200K. Here, the positive electrode terminal 220 is disposed between the negative electrode terminals 230. In FIG. 7, the electronic apparatus 200 is lightly shaded.

Upon use of the secondary battery 1, the electrode terminal 30 and the protruding part 10B are put into the recess 200K to thereby fit the secondary battery 1 to the electronic apparatus 200. Thus, in the coupling surface 200M of the electronic apparatus 200, the electrode terminal 30 is coupled to the positive electrode terminal 220, and the protruding part 10B is coupled to the pair of negative electrode terminals 230. As a result, the secondary battery 1 is coupled to the electronic apparatus 200 via the electrode terminal 30 and the protruding part 10B, and the electronic apparatus 200 thereby becomes operable using the secondary battery 1.

In this case, owing to the use of the secondary battery 1, i.e., the secondary battery of the present embodiment, it is possible to easily couple the secondary battery 1 to the electronic apparatus 200 for a reason described below.

To describe an example of use of a secondary battery of a comparative example, i.e., a secondary battery 300, FIG. 8 schematically illustrates a plan configuration of an electronic apparatus 400 to which the secondary battery 300 is coupled. FIG. 8 corresponds to FIG. 7. To describe another example of use of the secondary battery of the comparative example, i.e., the secondary battery 300, FIG. 9 schematically illustrates a plan configuration of an electronic apparatus 500 to which the secondary battery 300 is coupled. FIG. 9 corresponds to FIG. 7.

The secondary battery 300 has the configuration illustrated in FIG. 6. More specifically, the secondary battery 300 includes the battery can 110 (the container part 111 and the cover part 112) and the battery device 120. In the secondary battery 300, as described above, the container part 111 serves as the positive electrode terminal, and the cover part 112 serves as the negative electrode terminal. In each of FIGs. 8 and 9, the secondary battery 300 is darkly shaded.

The electronic apparatus 400 operable using the secondary battery 300 includes, as illustrated in FIG. 8, an apparatus body 410 that executes various functions, a positive electrode lead 420, a negative electrode lead 430, and an insulating tape 440 such as a polyimide tape. The positive electrode lead 420 is insulated from the negative electrode lead 430 via the insulating tape 440. In FIG. 8, the electronic apparatus 400 is lightly shaded.

The electronic apparatus 500 operable using the secondary battery 300 includes, as illustrated in FIG. 9, apparatus bodies 510 and 520 that execute various functions. The apparatus bodies 510 and 520 are separated from each other. The apparatus body 510 includes a positive electrode terminal 530, and the apparatus body 520 includes a negative electrode terminal 540. In FIG. 9, the electronic apparatus 500 is lightly shaded.

Upon use of the secondary battery 300 with the electronic apparatus 400, as illustrated in FIG. 8, the positive electrode lead 420 is coupled to the container part 111, and the negative electrode lead 430 is coupled to the cover part 112. The secondary battery 300 is thereby coupled to the electronic apparatus 400 via the container part 111 and the cover part 112, and the electronic apparatus 400 thus becomes operable using the secondary battery 300.

However, in order to couple the secondary battery 300 to the electronic apparatus 400, it is necessary to couple the positive electrode lead 420 to the container part 111, and to couple the negative electrode lead 430 to the cover part 112 independently of the positive electrode lead 420. In this case, in particular, it is necessary for the negative electrode lead 430 to make a detour to an opposite side of the battery device 120. Further, in order to prevent a short circuit, it is necessary to provide the insulating tape 440 between the positive electrode lead 420 and the negative electrode lead 430. This results in increased size and complexity of the coupling mechanism between the secondary battery 300 and the electronic apparatus 400, making it difficult to couple the secondary battery 300 to the electronic apparatus 400.

Further, upon use of the secondary battery 300 with the electronic apparatus 500, as illustrated in FIG. 9, the apparatus bodies 510 and 520 are placed opposite to each other with the secondary battery 300 interposed therebetween, following which the apparatus body 510 is coupled to the container part 111 via the positive electrode terminal 530, and the apparatus body 520 is coupled to the cover part 112 via the negative electrode terminal 540. The secondary battery 300 is thereby coupled to the electronic apparatus 500 via the container part 111 and the cover part 112, and the electronic apparatus 500 thus becomes operable using the secondary battery 300.

However, in order to couple the secondary battery 300 to the electronic apparatus 500, it is necessary to couple the positive electrode terminal 530 to the container part 111, and to couple the negative electrode terminal 540 to the cover part 112 independently of the positive electrode terminal 530. In this case, needless to say, it is necessary to bring the apparatus bodies 510 and 520 close to the secondary battery 300 independently of each other. This results in increased size and complexity of the coupling mechanism between the secondary battery 300 and the electronic apparatus 500, making it difficult to couple the secondary battery 300 to the electronic apparatus 500.

In contrast, upon use of the secondary battery 1 with the electronic apparatus 200, as illustrated in FIG. 7, the secondary battery 1 is fitted to the electronic apparatus 200 by means of the recess 200K, and as a result, the positive electrode terminal 220 is coupled to the electrode terminal 30 and the negative electrode terminals 230 are coupled to the protruding part 10B. Thus, coupling of the secondary battery 1 to each of the positive electrode terminal 220 and the negative electrode terminals 230 is completed only in the vicinity of the protruding part 10B. This eliminates the need for the coupling operation for each of the positive electrode lead 420 and the negative electrode lead 430 illustrated in FIG. 8, and also eliminates the need for the operation to mount the insulating tape 440. This further eliminates the need for the operation to move the apparatus bodies 510 and 520 illustrated in FIG. 9, that is, to bring the apparatus bodies 510 and 520 close to the secondary battery 300. This results in downsizing and simplification of the coupling mechanism between the secondary battery 1 and the electronic apparatus 200. Accordingly, it is possible to easily couple the secondary battery 1 to the electronic apparatus 200.

In this case, in particular, the use of the recess 200K to fit the secondary battery 1 to the electronic apparatus 200 allows for a reduction in area of the coupling surface 200M (a so-called current collection area) over which the electronic apparatus 200 and the secondary battery 1 are coupled to each other. Thus, also in terms of reduction in current collection area, it is possible to downsize the electronic apparatus 200 with the secondary battery 1 coupled thereto.

### <2. Secondary Battery (Second Embodiment)>

Next, a description will be given of a secondary battery according to a second embodiment of the technology.

The secondary battery according to the second embodiment includes a battery device 70 which is a stacked electrode body, in place of the battery device 20 which is a wound electrode body. The secondary battery according to the second embodiment has a configuration similar to that of the secondary battery according to the first embodiment except for the following.

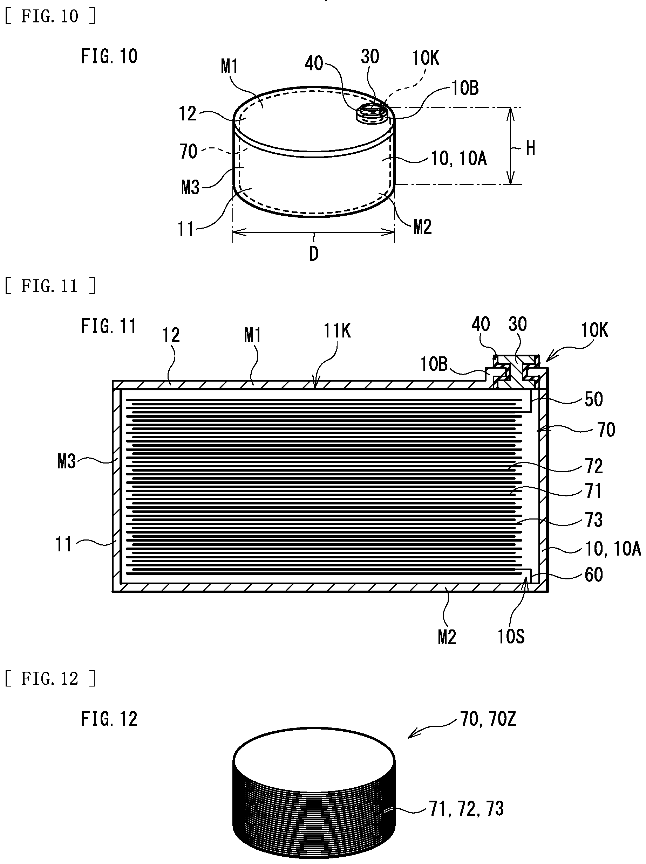

FIG. 10 is a perspective view of the configuration of the secondary battery according to the second embodiment, and corresponds to FIG. 1. FIG. 11 is an enlarged sectional view of the configuration of the secondary battery illustrated in FIG. 10, and corresponds to FIG. 2. FIG. 12 is a perspective view of a configuration of the battery device 70 illustrated in FIG. 10, and corresponds to FIG. 3. In each of FIGs. 10 to 12, the same components as those described already for the first embodiment are denoted with the same reference signs.

Note that FIG. 12 also illustrates a stacked body 70Z to be used to fabricate the battery device 70 in a process of manufacturing the secondary battery described later. The stacked body 70Z has a configuration similar to that of the battery device 70, i.e., the stacked electrode body, except that a positive electrode 71, a negative electrode 72, and a separator 73, which will be described later, are each yet to be impregnated with the electrolytic solution.

Specifically, the secondary battery may include, as illustrated in FIGs. 10 to 12, the battery can 10, the battery device 70, the electrode terminal 30, the gasket 40, the positive electrode lead 50, and the negative electrode lead 60.

Here, the electrode terminal 30 is located at an end of the bottom part M1. Accordingly, in the battery can 10, the protruding part 10B is disposed and the through hole 10K is provided at a position corresponding to the electrode terminal 30.

The battery device 70 includes the positive electrode 71, the negative electrode 72, and the separator 73. The positive electrode 71 and the negative electrode 72 are stacked on each other with the separator 73 interposed therebetween. Thus, the battery device 70 is a stacked electrode body including a plurality of positive electrodes 71 and a plurality of negative electrodes 72 that are stacked with the separators 73 interposed therebetween. The number of stacked layers of each of the positive electrode 71, the negative electrode 72, and the separator 73 is not particularly limited, and may be freely chosen. Respective configurations of the positive electrode 71, the negative electrode 72, and the separator 73 are similar to those of the positive electrode 21, the negative electrode 22, and the separator 23.

Note that the positive electrode 71 has an outer diameter smaller than that of the separator 73. A reason for this is that this prevents a short circuit between the battery can 10 serving as the negative electrode terminal and the positive electrode 71. Although not particularly limited, an outer diameter of the negative electrode 72 is preferably larger than the outer diameter of the positive electrode 71. A reason for this is that this prevents a short circuit between the positive electrode 71 and the negative electrode 72 caused by precipitation of lithium upon charging and discharging.

Inside the battery can 10, an excess space 10S is provided at a position corresponding to the mounting position of the electrode terminal 30. The excess space 10S is a space used to couple each of the positive electrode lead 50 and the negative electrode lead 60 and the battery device 70 to each other. The positive electrode lead 50 and the negative electrode lead 60 are each disposed inside the excess space 10S.

An operation of the secondary battery according to the second embodiment is similar to that of the secondary battery according to the first embodiment except that charging and discharging are performed at the battery device 70 in place of the battery device 20. Further, the secondary battery according to the second embodiment is similar to the secondary battery according to the first embodiment in manufacturing method, except that the battery device 70, in place of the battery device 20, is fabricated with use of the battery can 10 in which the position of each of the protruding part 10B, the through hole 10K, and the electrode terminal 30 is changed.

In a case of fabricating the battery device 70, first, a plurality of positive electrodes 71 and a plurality of negative electrodes 72 are alternately stacked with the separators 73 interposed therebetween to thereby fabricate the stacked body 70Z. Thereafter, the stacked body 70Z is placed into the container part 11, i.e., into a space other than the excess space 10S. Lastly, the electrolytic solution is injected into the battery can 10. This causes the stacked body 70Z (the positive electrode 21, the negative electrode 22, and the separator 23) to be impregnated with the electrolytic solution, thereby fabricating the battery device 70. The battery device 70 is thus sealed into the battery can 10. As a result, the secondary battery is completed.

The secondary battery according to the second embodiment includes the protruding part 10B and the electrode terminal 30 described above, together with the battery device 70. In this case, for a reason similar to that for the secondary battery according to the first embodiment, the coupling mechanism between the secondary battery and the electronic apparatus is downsized and simplified. Accordingly, it is possible to easily couple the secondary battery to the electronic apparatus.

In this case, with the battery device 70 which is a stacked electrode body, in particular, the winding center space 20K to be a dead space is not provided inside the battery can 10, unlike in a case with the battery device 20 which is a wound electrode body. Accordingly, the device space volume increases further, and therefore it is possible to further increase the energy density per unit volume. In addition, the excess space 10S may be reduced in volume. This allows for a further reduction in dead space inside the battery can 10, thereby making it possible to increase the energy density per unit volume yet further.

Other action and effects related to the secondary battery according to the second embodiment are similar to those related to the secondary battery according to the first embodiment, except for the action and effects related to the battery device 20 which is a wound electrode body.

Further, advantages related to an example of use of the secondary battery according to the second embodiment are similar to those related to the example of use of the secondary battery according to the first embodiment. More specifically, also in a case of coupling the secondary battery (the secondary battery 1) according to the second embodiment to the electronic apparatus 200, the coupling mechanism between the secondary battery 1 and the electronic apparatus 200 is downsized and simplified for a reason similar to that in the case of coupling the secondary battery (the secondary battery 1) according to the first embodiment to the electronic apparatus 200. Accordingly, it is possible to easily couple the secondary battery 1 to the electronic apparatus 200.

### <3. Modifications>

Next, a description will be given of modifications of the secondary batteries according to the series of embodiments described above. The configurations of the secondary batteries are appropriately modifiable, as will be described below. Note that any two or more of the following series of modifications may be combined.

### [Modifications 1 and 2]

In the first embodiment (FIG. 2), the gasket 40 is disposed between the battery can 10 and the electrode terminal 30. However, the mounting range of the gasket 40 is not particularly limited as long as it is possible to insulate the electrode terminal 30 from the battery can 10.

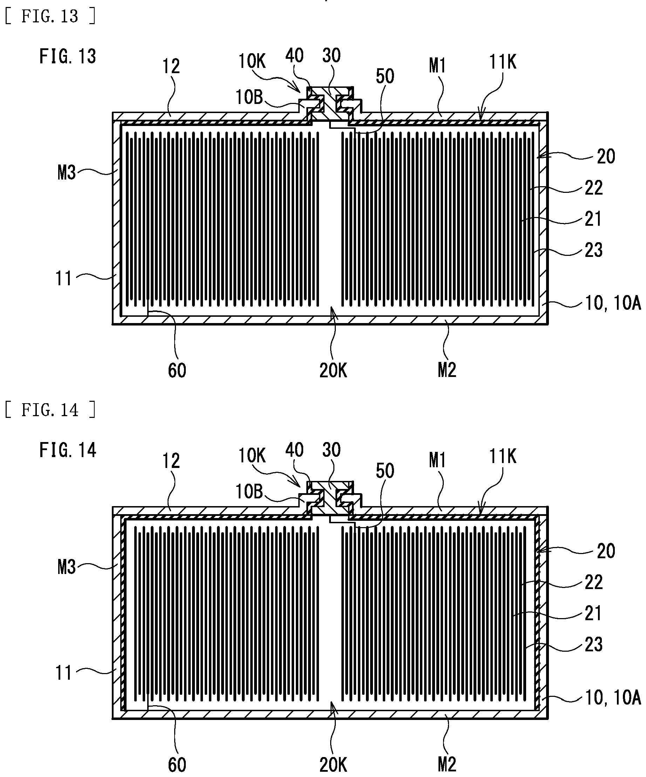

Specifically, the mounting range of the gasket 40 may be extended to a space between the battery can 10 and the battery device 20. In this case, as illustrated in FIG. 13 corresponding to FIG. 2, the mounting range of the gasket 40 may be extended to a region above the battery device 20, that is, to a region between the bottom part M1 of the battery can 10 and the battery device 20. Alternatively, as illustrated in FIG. 14 corresponding to FIG. 2, the mounting range of the gasket 40 may be extended via the regions above and beside the battery device 20, that is, via the region between the bottom part M1 and the battery device 20 to a region between the sidewall part M3 and the battery device 20.

In these cases also, the coupling mechanism between the secondary battery and the electronic apparatus is downsized and simplified. Accordingly, it is possible to achieve similar effects.

In particular, in the case illustrated in FIG. 13, the gasket 40 helps to prevent the occurrence of a short circuit between the battery can 10 and the positive electrode lead 50, and also helps to prevent the occurrence of a short circuit between the battery can 10 and the battery device 20 (the positive electrode 21). Accordingly, it is possible to secure stable operations of the secondary battery. Further, in the case illustrated in FIG. 14, the gasket 40 helps to prevent the occurrence of a short circuit between the battery can 10 and the positive electrode lead 50, and also helps to prevent the occurrence of a short circuit between the battery can 10 and the battery device 20 (the positive electrode 21) over a wide range. Accordingly, it is possible to bring higher stability to the operations of the secondary battery. In addition, in both cases, the gasket 40 also serves as the foregoing insulator (the insulator provided between the battery can 10 and the battery device 20), and therefore it is possible to omit the foregoing insulator.

Needless to say, although the description here has been given of a case of changing the mounting range of the gasket 40 in the first embodiment (FIG. 2), the mounting range of the gasket 40 may be changed in the second embodiment (FIG. 11). In this case also, it is possible to achieve similar effects.

### [Modifications 3 and 4]

In the first embodiment (FIG. 2), the electrode terminal 30 is not disposed to extend to the inside of the containing part 10A. However, the electrode terminal 30 may be disposed to extend to the inside of the containing part 10A.

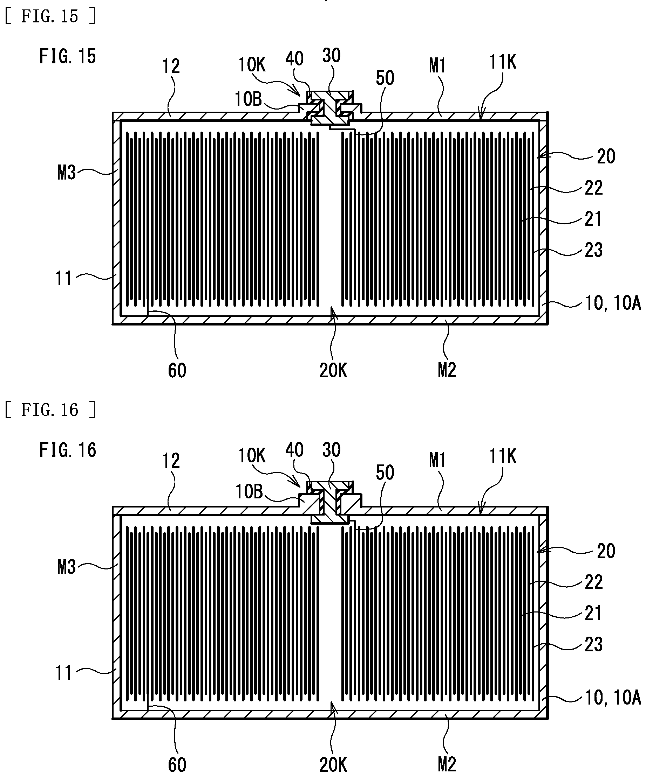

Specifically, as illustrated in FIG. 15 corresponding to FIG. 2, a portion of the electrode terminal 30 may be disposed to extend to the inside of the containing part 10A by shifting each of the protruding part 10B and the electrode terminal 30 forward in the direction from the electrode terminal 30 toward the inside of the battery can 10. Alternatively, as illustrated in FIG. 16 corresponding to FIG. 2 in conjunction with FIG. 4, a portion of the electrode terminal 30 may be disposed to extend to the inside of the containing part 10A by increasing the protruding part 10B in thickness and increasing the terminal part 31 in height.

In these cases also, the coupling mechanism between the secondary battery and the electronic apparatus is downsized and simplified. Accordingly, it is possible to achieve similar effects.

However, if a portion of the electrode terminal 30 is disposed to extend to the inside of the containing part 10A, the device space volume can decrease due to the presence of the portion of the electrode terminal 30. Accordingly, in order to increase the device space volume as much as possible, the electrode terminal 30 is preferably not disposed to extend to the inside of the containing part 10A.

Needless to say, although the description here has been given of a case where the electrode terminal 30 is disposed to extend to the inside of the containing part 10A in the first embodiment (FIG. 2), the electrode terminal 30 may be disposed to extend to the inside of the containing part 10A in the second embodiment (FIG. 11). In this case also, it is possible to achieve similar effects.

### [Modification 5]

In the first embodiment (FIGs. 2 and 4), the terminal parts 31 to 33 of the electrode terminal 30 all have a cylindrical three-dimensional shape, and therefore the electrode terminal 30 as a whole has a generally cylindrical three-dimensional shape. However, the three-dimensional shape of each of the terminal parts 31 to 33 is not particularly limited as long as the electrode terminal 30 is able to serve as the positive electrode terminal. Specifically, the terminal parts 31 to 33 may each have another three-dimensional shape, such as a shape of a polygonal prism, and the electrode terminal 30 as a whole may thus have another, generally polygonal prismatic three-dimensional shape. The polygonal prism is not particularly limited, and examples thereof include a triangular prism, a rectangular prism, and a pentagonal prism. In this case also, the coupling mechanism between the secondary battery and the electronic apparatus is downsized and simplified. Accordingly, it is possible to achieve similar effects.

Needless to say, although the description here has been given of a case of changing the three-dimensional shape of each of the terminal parts 31 to 33 in the first embodiment (FIG. 2), the three-dimensional shape of each of the terminal parts 31 to 33 may be changed in the second embodiment (FIG. 11). In this case also, it is possible to achieve similar effects.

Note that although not specifically illustrated here, other different variations are possible for the three-dimensional shape of the electrode terminal 30. Specifically, the electrode terminal 30 may include only the terminal parts 31 and 32 without the terminal part 33, or may include only the terminal parts 31 and 33 without the terminal part 32. Alternatively, the electrode terminal 30 may have a substantially uniform outer diameter D as a whole, and therefore the electrode terminal 30 may be substantially constant in outer diameter D. In this case also, it is possible to achieve similar effects.

### [Modification 6]

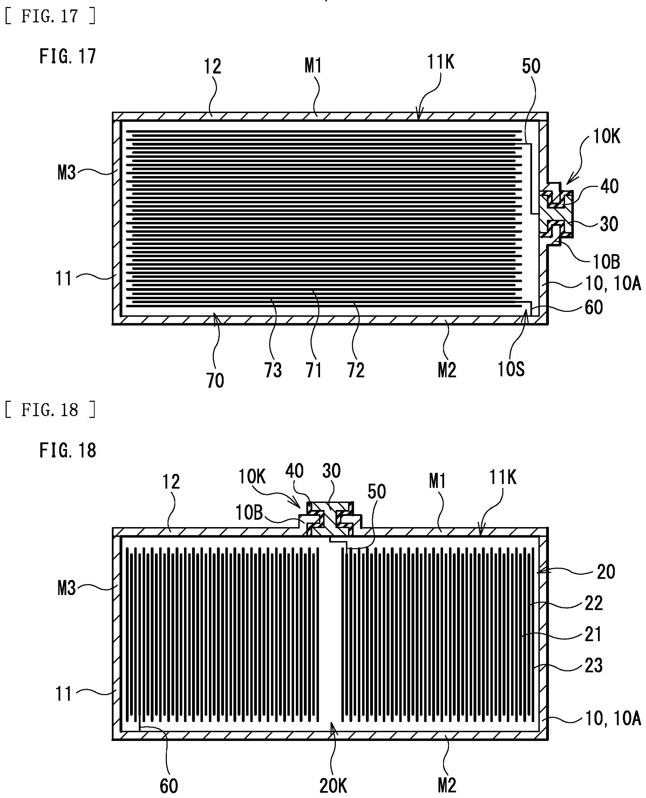

In the second embodiment (FIG. 11), the through hole 10K is provided at the bottom part M1 of the battery can 10, and therefore the electrode terminal 30 is also provided at the bottom part M1. However, the mounting position of the electrode terminal 30 is not particularly limited as long as the electrode terminal 30 is able to serve as the positive electrode terminal. Specifically, as illustrated in FIG. 17 corresponding to FIG. 11, the through hole 10K may be provided at the sidewall part M3 and the electrode terminal 30 may also be provided at the sidewall part M3. In this case also, the coupling mechanism between the secondary battery and the electronic apparatus is downsized and simplified. Accordingly, it is possible to achieve similar effects.

Needless to say, although the description here has been given of a case of changing the mounting position of the electrode terminal 30 in the second embodiment (FIG. 11), the mounting position of the electrode terminal 30 may be changed in the first embodiment (FIG. 2). In this case also, it is possible to achieve similar effects.

### [Modification 7]

In the first embodiment (FIG. 2), the electrode terminal 30 is coupled to the battery device 20 (the positive electrode 21) via the positive electrode lead 50, and the battery can 10 is coupled to the battery device 20 (the negative electrode 22) via the negative electrode lead 60. Thus, the electrode terminal 30 serves as the positive electrode terminal, and the battery can 10 serves as the negative electrode terminal.

However, as illustrated in FIG. 18 corresponding to FIG. 2, the electrode terminal 30 may be coupled to the battery device 20 (the negative electrode 22) via the negative electrode lead 60, and the battery can 10 may be coupled to the battery device 20 (the positive electrode 21) via the positive electrode lead 50. Thus, the electrode terminal 30 may serve as the negative electrode terminal, and the battery can 10 (the protruding part 10B) may serve as the positive electrode terminal.

In this case, in order to serve as the negative electrode terminal, the electrode terminal 30 includes one or more of materials including, without limitation, iron, copper, nickel, stainless steel, an iron alloy, a copper alloy, and a nickel alloy. In order to serve as the positive electrode terminal, the battery can 10 includes one or more of materials including, without limitation, aluminum, an aluminum alloy, and stainless steel.

In this case also, the coupling mechanism between the secondary battery and the electronic apparatus is downsized and simplified. Accordingly, it is possible to achieve similar effects.

Needless to say, although the description here has been given of a case of interchanging the function of the electrode terminal 30 (the positive electrode terminal) and the function of the battery can 10 (the negative electrode terminal) in the first embodiment (FIG. 2), the function of the electrode terminal 30 (the positive electrode terminal) and the function of the battery can 10 (the negative electrode terminal) may be interchanged in the second embodiment (FIG. 11). In this case also, it is possible to achieve similar effects.

### [Modifications 8 and 9]

In the first embodiment (FIG. 5), the battery can 10 includes the container part 11 and the cover part 12. The container part 11 and the cover part 12 are welded to each other. However, the configuration of the battery can 10 is not particularly limited as long as the battery can 10 is a crimpless can that is able to contain the battery device 20 while supporting the electrode terminal 30.

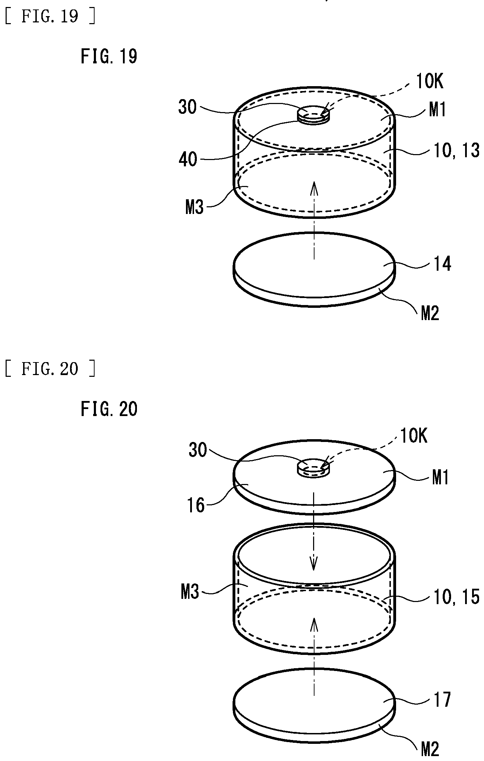

Specifically, as illustrated in FIG. 19 corresponding to FIG. 5, the battery can 10 may include a container part 13 and a bottom part 14 in place of the container part 11 and the cover part 12. The container part 13 is a flat and cylindrical (handleless mug-shaped) member with one end open and the other end closed, and includes the electrode terminal 30 provided in the through hole 10K with the gasket 40 interposed therebetween. The bottom part 14 is a generally plate-shaped member. Thus, the battery can 10 described here is a welded can including two members (the container part 13 and the bottom part 14) that are welded to each other.

In a case of fabricating the secondary battery using this battery can 10 including the container part 13 and the bottom part 14, the wound body 20Z is placed into the container part 13 and thereafter the bottom part 14 is joined to the container part 13 by a method such as a welding method. A fabrication procedure of the secondary battery is otherwise similar to that of the secondary battery using the battery can 10 including the container part 11 and the cover part 12.

Alternatively, as illustrated in FIG. 20 corresponding to FIG. 5, the battery can 10 may include a container part 15, a cover part 16, and a bottom part 17 in place of the container part 11 and the cover part 12. The container part 15 is a flat and cylindrical (generally handleless mug-shaped) member with both ends open. The cover part 16 is a generally plate-shaped member including the electrode terminal 30 provided in the through hole 10K with the gasket 40 interposed therebetween. The bottom part 17 is a generally plate-shaped member. Thus, the battery can 10 described here is a welded can including three members (the container part 15, the cover part 16, and the bottom part 17) that are welded to each other.

In a case of fabricating the secondary battery using this battery can 10 including the container part 15, the cover part 16, and the bottom part 17, the wound body 20Z is placed into the container part 15 and thereafter the cover part 16 and the bottom part 17 are each joined to the container part 15 by a method such as a welding method. A fabrication procedure of the secondary battery is otherwise similar to that of the secondary battery using the battery can including the container part 11 and the cover part 12.

In these cases also, the battery can 10 is able to contain the battery device 20 inside. Accordingly, it is possible to achieve similar effects.

Needless to say, although the description here has been given of a case of changing the configuration of the battery can 10 in the first embodiment (FIG. 2), the configuration of the battery can 10 may be changed in the second embodiment (FIG. 11). In this case also, it is possible to achieve similar effects.

### [Modification 10]

The positive electrode lead 50 may be physically separated from the positive electrode current collector and thereby provided as a component separate from the positive electrode current collector. Alternatively, the positive electrode lead 50 may be physically coupled to the positive electrode current collector and thereby integrated with the positive electrode current collector. In the latter case, in a process of forming the positive electrode 21 by means of a punching process on a metal foil, the positive electrode current collector after forming the positive electrode active material layer thereon may be punched into a configuration in which the positive electrode lead 50 and the positive electrode current collector are integrated with each other. It is thereby possible to form the positive electrode 21 including the positive electrode current collector integrated with the positive electrode lead 50. In this case also, electrical conduction between the positive electrode lead 50 and the positive electrode current collector is secured. Accordingly, it is possible to achieve similar effects.

Note that, in a case where the positive electrode lead 50 is integrated with the positive electrode current collector, the positive electrode 21 need not have a foil winding structure, and therefore the positive electrode active material layer may be provided on the entire positive electrode current collector. In other words, the positive electrode current collector does not have to be exposed at each of the ends of the positive electrode 21 on the inner side and the outer side of the winding.

Modification 10 described here is also applicable to the negative electrode lead 60 and the negative electrode current collector. More specifically, the negative electrode lead 60 may be separate from the negative electrode current collector or may be integrated with the negative electrode current collector. In this case also, electrical conduction between the negative electrode lead 60 and the negative electrode current collector is secured. Accordingly, it is possible to achieve similar effects. Needless to say, in a case where the negative electrode lead 60 is integrated with the negative electrode current collector, the negative electrode 22 need not have the foil winding structure, and the negative electrode active material layer may thus be provided on the entire negative electrode current collector.

### [Modification 11]

In the process of manufacturing the secondary battery, the wound body 20Z is placed into the container part 11, and the cover part 12 is joined to the container part 11 by a method such as a welding method, following which the electrolytic solution is injected into the battery can 10 (the container part 11 and the cover part 12) through the liquid injection hole. In other words, the wound body 20Z is impregnated with the electrolytic solution by injecting the electrolytic solution into the battery can 10 after the battery can 10 is formed, that is, after the cover part 12 is joined to the container part 11.

However, the cover part 12 may be joined to the container part 11 by a method such as a welding method after the wound body 20Z is placed into the container part 11 and the electrolytic solution is injected into the container part 11. In other words, the wound body 20Z may be impregnated with the electrolytic solution by injecting the electrolytic solution into the container part 11 before the battery can 10 is formed, that is, before the cover part 12 is joined to the container part 11. In this case, the battery can 10 does not have to be provided with a liquid injection hole.

In this case also, the battery device 20 is fabricated by impregnation of the wound body 20Z with the electrolytic solution, and the battery device 20 is sealed inside the battery can 10. Accordingly, it is possible to achieve similar effects. In this case, in particular, it is possible to simplify the configuration of the battery can 10 because it is unnecessary for the battery can 10 to have a liquid injection hole. Further, because the electrolytic solution is injected into the container part 11 through the opening 11K having an opening area larger than that of the liquid injection hole, it is possible to improve efficiency of injection of the electrolytic solution for the wound body 20Z, and to simplify the process of injecting the electrolytic solution.

Although the technology has been described above with reference to some embodiments and examples, configurations of the technology are not limited to those described with reference to the embodiments and examples above, and are therefore modifiable in a variety of ways.

Specifically, while a description has been given of a case of using a liquid electrolyte (an electrolytic solution), the electrolyte is not limited to a particular kind. Thus, a gel electrolyte (an electrolyte layer) may be used, or an electrolyte in a solid form (a solid electrolyte) may be used.

Further, while a description has been given of a case where the battery device has a wound-type device structure (a wound electrode body) and a case where the battery device has a stacked-type device structure (a stacked electrode body), the device structure of the battery device is not particularly limited, and any other device structure, such as a zigzag-folded-type device structure where the electrodes (the positive electrode and the negative electrode) are folded in a zigzag shape, may be chosen.

Further, while a description has been given of a case where the electrode reactant is lithium, the electrode reactant is not particularly limited. Specifically, the electrode reactant may be, as described above, another alkali metal, such as sodium or potassium, or may be an alkaline earth metal, such as beryllium, magnesium, or calcium. Other than the above, the electrode reactant may be another light metal, such as aluminum.

The effects described herein are mere examples. Therefore, the effects of the technology are not limited to the effects described herein. Accordingly, the technology may achieve any other effect.

## Claims

1. A secondary battery comprising:
a battery device including a positive electrode and a negative electrode;
an outer package member having a flat and columnar shape and including a containing part and a protruding part, the containing part containing the battery device inside, the protruding part protruding from the containing part, the outer package member being coupled to one of the positive electrode and the negative electrode; and
an electrode terminal coupled to another of the positive electrode and the negative electrode, the electrode terminal being disposed inside the protruding part and including a portion protruding from the protruding part.

2. The secondary battery according to claim 1, wherein the portion of the electrode terminal protrudes from the protruding part.

3. The secondary battery according to claim 1 or 2, wherein the electrode terminal is not disposed to extend to an inside of the containing part.

4. The secondary battery according to any one of claims 1 to 3, wherein the outer package member includes no crimp part.

5. The secondary battery according to claim 4, wherein the outer package member includes two or more members that are welded to each other.

6. The secondary battery according to any one of claims 1 to 5, wherein
the protruding part has a through hole communicating with an inside of the containing part, and
the electrode terminal includes
a first terminal part disposed in the through hole and having an outer diameter smaller than an inner diameter of the through hole, and
a second terminal part and a third terminal part that are coupled to respective ends of the first terminal part that are opposite in a direction from the electrode terminal toward an inside of the outer package member, the second terminal part and the third terminal part each having an outer diameter larger than the inner diameter of the through hole.

7. The secondary battery according to any one of claims 1 to 6, further comprising an insulating member disposed between the outer package member and the electrode terminal.

8. The secondary battery according to claim 7, wherein the insulating member is disposed to extend to a space between the outer package member and the battery device.

9. The secondary battery according to any one of claims 1 to 8, wherein the battery device has a three-dimensional shape corresponding to a three-dimensional shape of the outer package member.

10. The secondary battery according to any one of claims 1 to 9, wherein
the battery device further includes a separator, and
the positive electrode and the negative electrode are wound with the separator interposed therebetween.

11. The secondary battery according to any one of claims 1 to 9, wherein
the battery device further includes a separator, and
the positive electrode and the negative electrode are stacked on each other with the separator interposed therebetween.

12. The secondary battery according to any one of claims 1 to 11, wherein the secondary battery is a button-type secondary battery.
